# EUROPEAN PATENT SPECIFICATION

(11) **EP 0 926 053 B1**
(45) Date of publication and mention of the grant of the patent: **09.07.2003**
(21) Application number: 98124688.7
(22) Date of filing: 24.12.1998
(51) Int. Cl.: B62J 35/00, B60K 15/04

(54) **Fuel tank structure for motorcycle**
Kraftstofftank für Motorräder
Réservoir de carburant pour motocyclettes

(30) Priority: 25.12.1997 JP 35678797
(43) Date of publication of application: 30.06.1999
(73) Proprietor: SUZUKI MOTOR CORPORATION, Hamamatsu-shi, Shizuoka-ken (JP)
(72) Inventor: Urano, Shoichi, Iwata-shi, Shizuoka-ken (JP)
(74) Representative: Luderschmidt, Schüler & Partner GbR

(56) References cited:
- DE-U- 8 528 368
- DE-U- 9 006 818
- JP-A- 9 286 367
- JP-A- 9 323 684

## Description

The present invention relates to a fuel tank structure for a motorcycle according to the preamble of claim 1, e.g., a scooter, that allows insertion of a fuel nozzle having a size equal to or smaller than a predetermined size into a fuel port and disallows insertion of a fuel nozzle having a size larger than the predetermined size into the fuel port.

Various laws and regulations are applied to motorcycles depending on countries, and a regulation concerning restrictions on the diameter (caliber) of the fuel port of a fuel tank is one of them. The content of this regulation reads "a vehicle that should not use leaded gasoline must have a fuel port with a diameter equal to or smaller than 23.6 mm so that it cannot be refueled with a fuel supplier (gasoline pump) for the leaded gasoline". When a fuel tank is made of a metal, this regulation can be satisfied comparatively easily. That is, when a fuel tank is formed from a metal, even if a predetermined air vent gap is to be formed, or even if the fuel port has a complicated structure, the fuel tank can be easily manufactured since a plurality of components can be integrally welded.

The prior art of this type includes Japanese Utility Model Application Laid-Open Sho No.63-159393, Japanese Patent Application Laid-Open Sho No.62-120226, and the like.

When a fuel tank is made of a synthetic resin, it is difficult to satisfy the above regulation. When a fuel tank is formed from a synthetic resin, since a synthetic resin has characteristic nature and problems such as swelling tendency and the like and has a lower degree of freedom in processing than a metal, it cannot cope with a fuel port having a complicated structure. Accordingly, it is very difficult to obtain a synthetic resin fuel tank capable of satisfying the above regulation.

The present invention has been made in consideration of the conventional problems as described above, and its object is to provide a fuel tank structure for a motorcycle capable of easily satisfying regulations concerning restrictions on a fuel port even if the fuel tank is formed from a synthetic resin.

According to the present invention, there is provided a fuel tank structure for a motorcycle according to the features of Claim 1.

The "motorcycles" in the present invention can be of any type and include at least on-the-road type motorcycles, off-the-road type motorcycles, scooters, or the like. The "fuel tank (25)" may be formed from polyester, polyethylene, polypropylene, a melamine resin, a urea resin, or the like. The "tube filler (27)" may be formed from the same synthetic resin as the material for forming the fuel tank (25), or various types of metals. The "inward projection (30)" may be arbitrarily formed into a structure constituted of a plurality of projections arranged at predetermined intervals, an annular shape, or the like. The inward projection (30) may be one or more.

The "recess (39)" can be formed by making one or more dents at the large-diameter portion (34) of the tube filler (32), or by forming an outward projection on the large-diameter portion (34) so as to define a space serving as the recess between the outward projection and the largest-diameter portion (33).

According to the present invention, since the lower portion of the tube filler (32) forms the reduced-diameter portion (35), this reduced-diameter portion (35) of the tube filler (32) allows insertion of a fuel nozzle (c) having a size equal to or smaller than a predetermined size and disallows insertion of a fuel nozzle having a size larger than the predetermined size, thus satisfying a regulation concerning restrictions on a fuel port. In addition, the tube filler (32) is fitted in the outer tube (27) by engaging the recess (39) with the outward projection (30), leaving gaps between the outer tube (27) and the tube filler (32). Thus, even if the fuel tank (25) is made of a synthetic resin, the characteristic nature and problems, e.g., swelling tendency in which the synthetic resin increases its volume and is softened as it absorbs the fuel, can be coped with.

A gas communicating hole (40) is preferably made at the lower position of the large-diameter portion (28) and/or the upper position of the reduced-diameter portion (35) of the tube filler (32). During refueling, air in the fuel tank (25) smoothly flows from the fuel tank (25) to the outside sequentially through the gap (41) between the small-diameter portion (29) of outer tube (27) and the reduced-diameter portion (35) of the tube filler (32), the gas communicating hole (40), and the upper opening of the tube filler (32). Accordingly, overflow or splashing of the fuel during refueling can be prevented.

One or more "gas communicating holes (40)" having various types of shape, e.g., a circular shape, an oval shape, an elliptic shape, a square shape, or the like may be made. The gas communicating hole (40) is preferably made at a portion as high as possible of the circumferential wall of the tube filler (32).

Also, the tube filler (32) can be molded from a synthetic resin. In this case, the manufacturing cost can be decreased, and the problems such as swelling tendency can be appropriately coped with.

It is preferable that the inward projection (30) of the outer tube (27) has an annular shape extending circumferentially, a plurality of outward projections (38) are formed on an outer circumference of the large-diameter portion (34) of the tube filler (32) at circumferential intervals, and thereby the recess (39) engaging with the inward projection (30) is made between the largest-diameter portion (33) and the outward projection (38) of the tube filler (32). Then, the tube filler (32) can be fitted in the outer tube (27) easily and reliably.

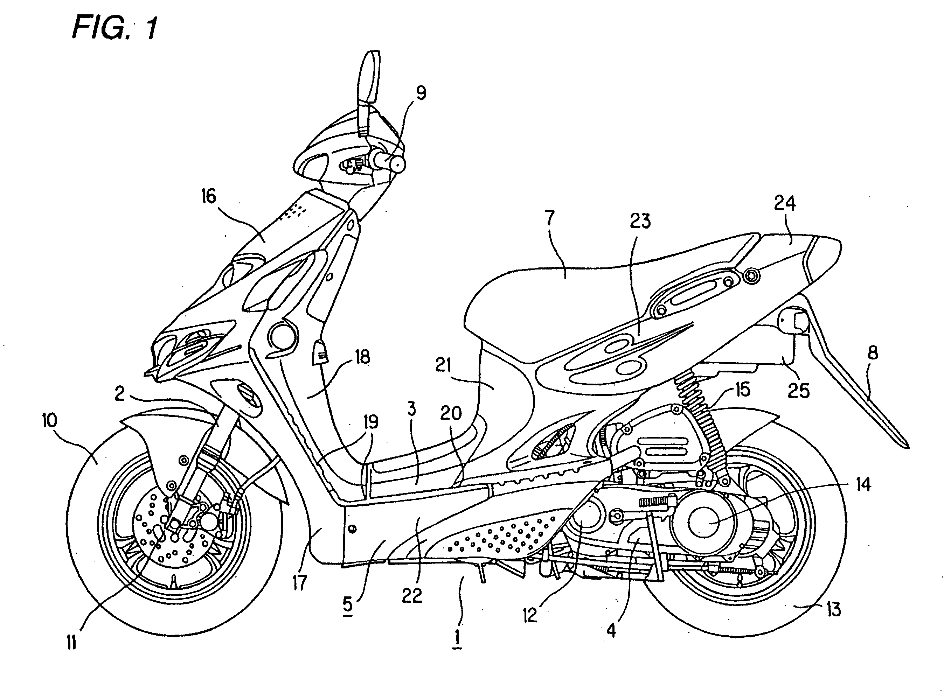

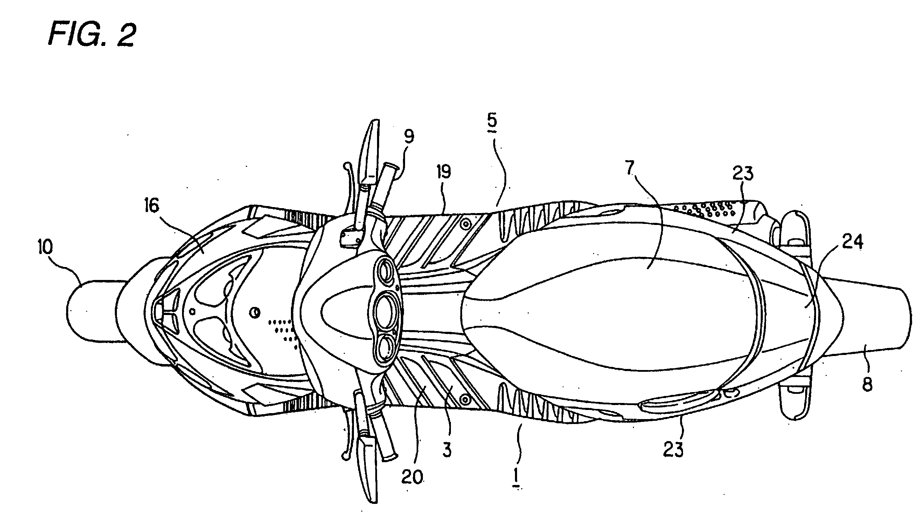

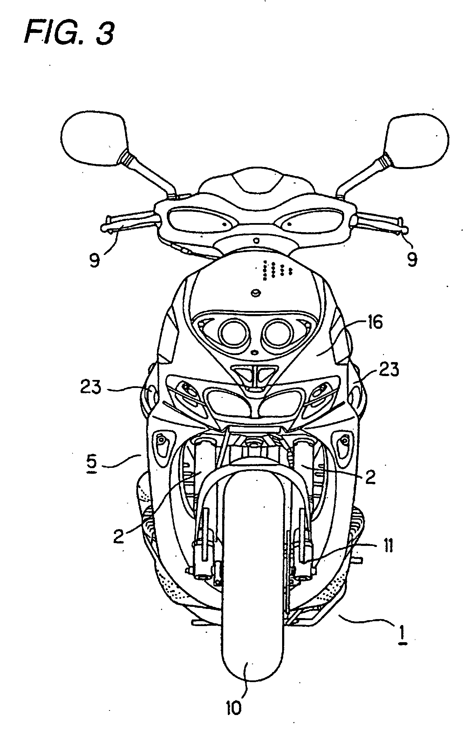

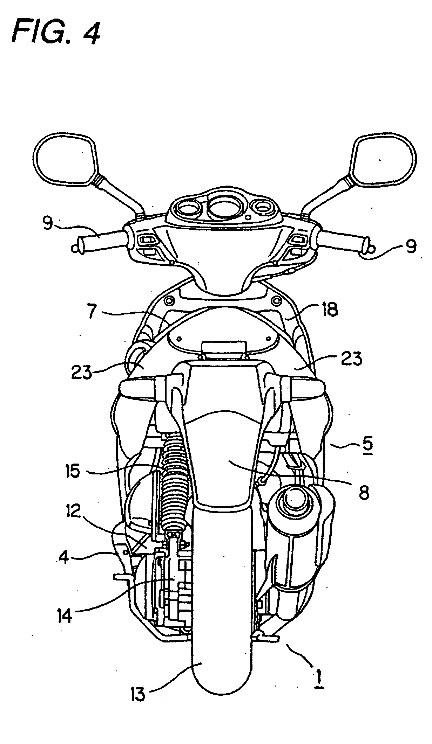

Fig.1 is a side view of a motorcycle equipped with a fuel tank to which a structure according to an embodiment of the present invention is applied, Fig.2 is a plan view of the same, Fig.3 is a front view of the same, and Fig.4 is a rear view of the same. A motorcycle 1 has a front fork 2, foot steps 3, a power unit 4, a cover 5, a seat 7, a rear fender 8, handgrips 9, a front tire 10, a front brake 11, an engine 12, a rear tire 13, a transmission system 14, shock absorbers 15, a front leg shield 16, a lower leg shield 17, a front box 18, a floor mat 19, rear leg shields 20 and 21, side covers 22, rear side covers 23, a fuel lid 24, and a fuel tank 25.

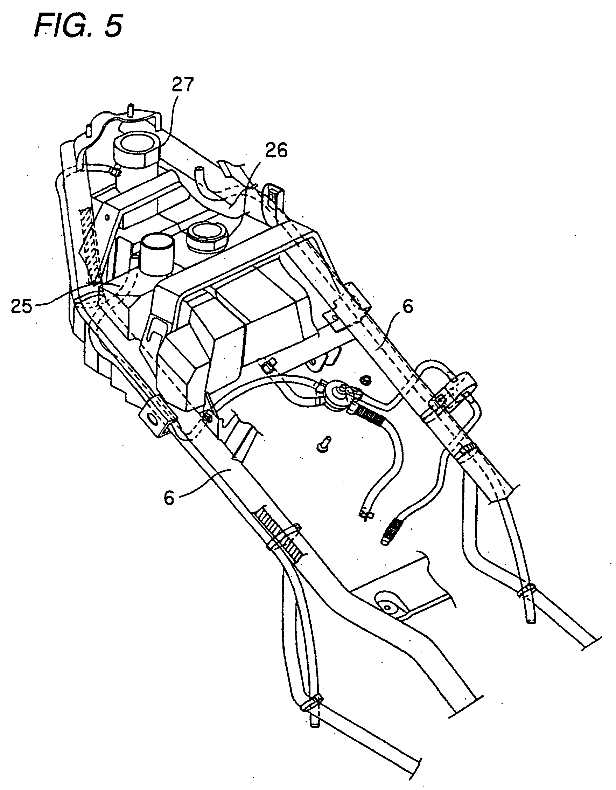

Fig.5 is a perspective view showing how the fuel tank 25 is mounted on the motorcycle 1. The motorcycle 1 has seat rails 6, and the fuel tank 25 is supported by the seat rails 6.

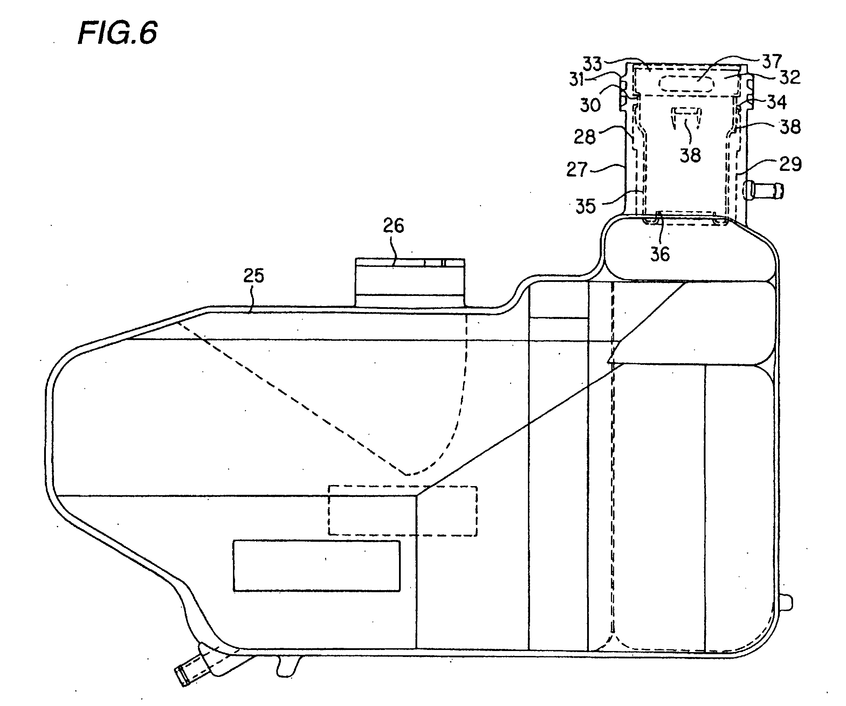

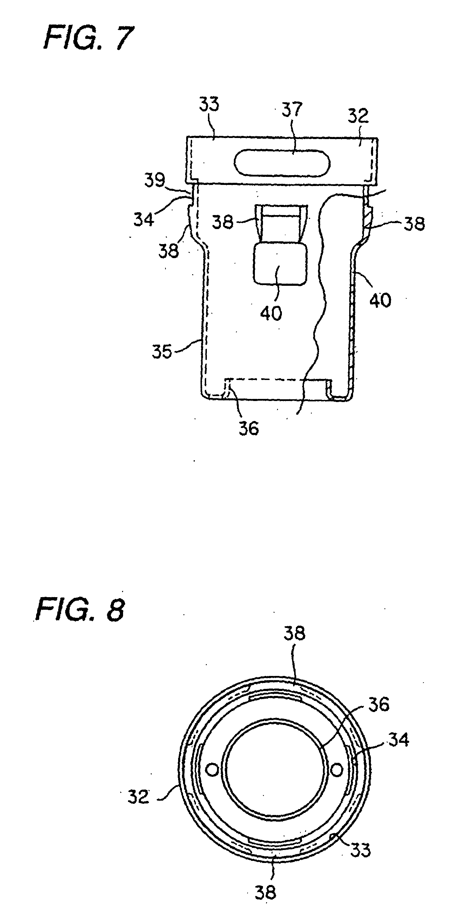

Fig.6 is a side view of the fuel tank 25 shown in Fig.5. The fuel tank 25 has a level sender gage installation port 26. The fuel port of the fuel tank 25 is constituted of an outer tube (protrudent tubular portion) 27 and a tube filler (inner tube) 32. The outer tube 27 is constituted of a large-diameter portion 28 and a small-diameter portion 29, and has an inward projection 30 on the inner side of the large-diameter portion 28 and a cap thread 31 on the outer side of the large-diameter portion 28. Other reference numerals in Fig.6 will be described in the following description of Fig.7.

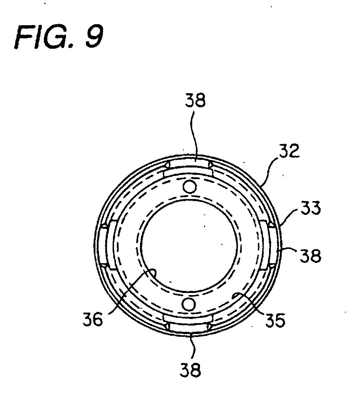

Fig.7 is a (partially cutaway) front view of the tube filler 32 shown in Fig.6, Fig.8 is a plan view of the same, and Fig.9 is a bottom view of the same. The tube filler 32 is constituted of a largest-diameter portion 33, a large-diameter portion 34, and a reduced-diameter portion 35, and has a guide 36, a lateral hole 37, outward projections (lugs) 38, a recess 39, and air communicating holes 40.

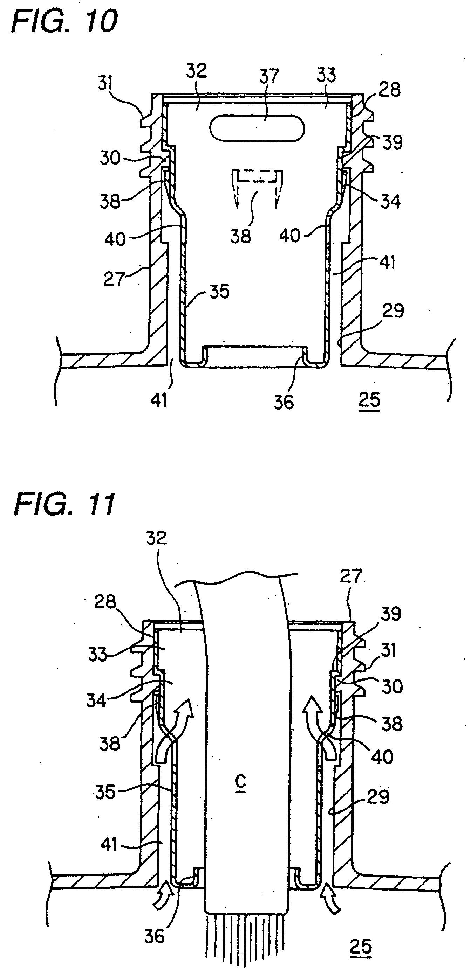

Fig.10 is a sectional view of the fuel port of the fuel tank 25 shown in Fig.6. The tube filler 32 is fitted in the outer tube 27. The large-diameter portion 28 and the largest-diameter portion 33 are fitted with each other, and the inward projection 30 and the recess 39 are engaged with each other. A gap 41 is defined between the outer tube 27 and the reduced-diameter portion 35 of the tube filler 32.

Fig.11 is a sectional view of the fuel port in Fig.10 in a refueling state. A fuel nozzle C is inserted in the guide 36, and air in the fuel tank 25 flows out through the air communicating holes 40.

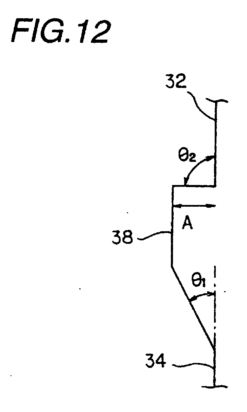

Fig.12 is an enlarged view of the outward projection 38 of the tube filler 32. An angle θ₁ of the lower surface of the outward projection 38 is set at 45° or less, and an angle θ₂ of the upper surface of the outward projection 38 is set at 90° or less.

The motorcycle equipped with the fuel tank to which the structure according to the embodiment of the present invention is applied will be described in detail with reference to Figs.1 to 4. Fig.1 is a side view of the motorcycle 1, Fig.2 is a plan view of the same, Fig.3 is a front view of the same, and Fig.4 is a rear view of the same.

The motorcycle 1 has an underbone type frame (not shown) covered with the cover 5. This frame is disposed with the rotatable front fork 2 at its front portion, the foot steps 3 at its lower center, and the swingable power unit 4 constituting a swing arm at its rear portion. The frame has a precision-machined head pipe (not shown) at its front portion. This head pipe is connected to a down tube (not shown) extending downward and backward in an arcuated manner. A main tube (not shown) is longitudinally connected to the rear portion of the down tube. The pair of seat rails 6 (Fig.5) extend backward and slightly upward from the rear upper rear portion of the main tube.

A stand (not shown) is swingably connected to the lower rear portion of the down tube. An article container (not shown) for containing a helmet and the like is provided above the main tube. The seat 7 is supported vertically swingablly through a hinge in front of the upper portion of the article container so as to open and close the upper opening of the article container. The rear fender 8 is fixed on the pair of seat rails 6 to be located below them.

The front fork 2 extends through the head pipe and is supported by it through a bearing or the like so as to be steerable. The handgrips 9 are disposed above the front fork 2, and the front tire 10, the front brake 11, and the like are supported at the lower end of the front fork 2. The power unit 4 integrally has the engine 12 and the transmission system 14 that supports the rear tire 13. The front portion of the power unit 4 is swingably connected to the rear portion of the down tube through a link (not shown), and is suspended from the pair of seat rails 6 through the shock absorbers 15.

The cover 5 has the front leg shield 16 that surrounds the front fork 2 to cover it, and the front box 18 having the lower leg shield 17 at its lower portion. The rear leg shield 20 applied with the floor mat 19 is fixed on the front box 18. The rear leg shield 21 having a maintenance lid is fixed on the rear portion of the front box 18, and the side covers 22 are fixed to the right and left sides, respectively, of the front box 18. The rear side covers 23 are respectively fixed on the both sides of the rear portion of the frame. The fuel lid 24 located behind the seat 7 is supported vertically swingably through a hinge so as to open and close the rear opening portion between the pair of rear side covers 23.

The fuel tank structure according to the embodiment of the present invention will be described in detail with reference to Figs.5 to 12. Fig.5 is a perspective view showing how the fuel tank 25 is mounted on the motorcycle 1 shown in Fig.1. Fig.6 is a side view of the fuel tank 25 shown in Fig.5. Fig.7 is a front view of the tube filler 32 shown in Fig.6, Fig.8 is a plan view of the same, and Fig.9 is a bottom view of the same. Fig.10 is a sectional view of the fuel port of the fuel tank 25 shown in Fig.6. Fig.11 is a sectional view of the fuel port in Fig.10 in a refueling state. Fig.12 is an enlarged view of the outward projection 38 of the tube filler 32 shown in Fig.7.

As shown in Figs.5 and 6, the fuel tank 25 is molded from polyethylene (hereinafter also referred to as PE) having a good impact resistance, a good chemical resistance, and good electrical characteristics, and is mounted on the rear portion of the pair of seat rails 6 through fastening members. The level sender gage installation port 26 is molded to project from the low front portion of the upper surface of the fuel tank 25 (main body), and the level sender gage is to be installed on this level sender gage installation port 26.

As shown in Fig.6, the outer tube (protrudent tubular portion) 27 is molded integrally with the tank main body in the form of projecting upward from the high rear portion of the upper surface of the fuel tank 25 (main body), and is covered with the fuel lid 24, as shown in Fig.1. As shown in Figs.10 and 11, the upper portion of the inner circumferential surface of the outer tube 27 is molded into the large-diameter portion 28, and the lower portion of the inner circumferential surface of the outer tube 27 is molded into the small-diameter portion 29. On the upper position of the large-diameter portion 28, the inward projection 30 having an annular shape when seen from above is molded into the form of projecting inwardly and extending circumferentially. The thread 31 is molded on the upper portion of the outer circumferential surface of the outer tube 27, and the cap is to be detachably fitted on the thread 31 by screwing.

The tube filler (inner tube) 32 is molded from PE into basically a substantially cup-like shape having an open bottom portion, as shown in Figs.7 to 9. The upper portion of the tube filler 32 is molded into the largest-diameter portion 33, the intermediate portion of the tube filler 32 is molded into the large-diameter portion 34 having a tapered portion at its lower position, and the lower portion of the tube filler 32 is molded into the reduced-diameter portion 35. The opening in the bottom portion of the tube filler 32 has a diameter of 22.6 mm considering the regulations as described above, and its innermost edge portion is bent upward in the tube filler 32. This innermost edge portion serves as the guide 36 when the fuel nozzle C (not shown) is inserted into the tube filler 32.

The lateral hole 37 having the oval shape is made in the largest-diameter portion 33 of the tube filler 32. The large-diameter portion 34 of the tube filler 32 defines a small gap with the large-diameter portion 28 of the outer tube 27. The plurality of outward projections (lugs) 38 are molded on the upper position of the-large-diameter portion 34, these are spaced circumferentially at predetermined intervals and project outwardly. There is the space between the plurality of outward projections 38 and the largest-diameter portion 33 so as to define the lateral U-shaped recess 39 that engages with the inward projection 30 leaving a small gap under the inward projection 30 considering swelling tendency.

As shown in Fig.12, each outward projection 38 has such a projecting amount A that sufficiently overlaps the inward projection 30 of the outer tube 27 considering dimensional changes due to swelling tendency. And the angle θ₁ of its lower surface is set to satisfy θ₁ ≤ 45° from the viewpoint of facilitating fitting and the angle θ₂ of its upper surface is set to satisfy θ₂ ≤ 90° from the viewpoint of removal prevention. The plurality of air communicating holes 40 are made in the tapered portion of the large-diameter portion 34 or below the outward projections 38 of the tube filler 32 at predetermined circumferential intervals. Furthermore, the reduced-diameter portion 35 of the tube filler 32 serves to define the air communicating gap 41 with the small-diameter portion 29 of the outer tube 7.

With this arrangement, the tube filler 32 is fitted into the outer tube 27 by pressing, since the lower portion of the tube filler 32 is molded into the reduced-diameter portion 35 and the plurality of outward projections 38 are projected from the upper portion of the large-diameter portion 34 of the tube filler 32, even if the fuel tank 25 is made of a synthetic resin, the regulations concerning the fuel port can be satisfied very easily. Also, the characteristic nature and problems, e.g., swelling tendency, of the synthetic resin can be coped with easily.

Since the plurality of air communicating holes 40 are made in the tapered portion of the large-diameter portion 34 and the comparatively large gap 41 is defined between the small-diameter portion 29 of the outer tube 27 and the reduced-diameter portion 35 of the tube filler 32, smooth and easy outflow of air indicated by blank arrows can be expected, and blow-off or splashing of the gasoline during refueling can be prevented very effectively. The tube filler 32 can be molded from PE similar to the material of the fuel tank 25. Since the small gap is defined between the lower portion of the inward projection 30 and the upper portion of the outward projections 38, when setting the tube filler 32, problems such as machining precision and swelling can be coped with very effectively.

In the above embodiment, the lateral hole 37 is made in the largest-diameter portion 33 of the tube filler 32. However, the present invention is not limited to this, and one or a plurality of lateral holes 37 having various types of shape, e.g., a circular shape, an elliptic shape, or a square shape, may be formed in the largest-diameter portion 33 of the tube filler 32. The upper periphery of the largest-diameter portion 33 of the tube filler 32 may be extended in the radially outward direction, and the upper periphery thus extended may be placed on and supported by the end of the large-diameter portion 28 of the outer tube 27. Although a tapered portion is formed at the bottom of the large-diameter portion 34 of the tube filler 32 in the above embodiment, it can be omitted.

## Claims

1. A fuel tank structure for a motorcycle (1), wherein
a tank main body (25) of the fuel tank is made of a synthetic resin, an outer tube (27) is molded to project from the tank main body (25), and a tube filler (32) is fitted in the outer tube (27), an upper portion and a lower portion of an inner circumference of the outer tube (27) are formed into a large-diameter portion (28) and a small-diameter portion (29), respectively, and
an upper portion, an intermediate portion, and a lower portion of a circumferential wall of the tube filler (32) are formed into a largest-diameter portion (33), a large-diameter portion (34), and a reduced-diameter portion (35), respectively, a gap is defined between the reduced-diameter portion (35) of the tube filler (32) and the small-diameter portion (29) of the outer tube (27),
**characterized in that** an inward projection (30) is formed at an inner circumference of the large-diameter portion (28) of the outer tube (27), and a recess (39) is formed at an outer circumference of the large-diameter portion (34) of the tube filler (32) so as to engage with the inward projection (30) leaving a small gap under the inward projection (30), and a gas communicating hole (40) is made at the lower position of the large-diameter portion (34) and/or at the upper position of the reduced-diameter portion (35) of the tube filler (32).

2. A fuel tank structure for a motorcycle (1) according to claim 1, wherein the tube filler (32) is molded from a synthetic resin.

3. A fuel tank structure for a motorcycle (1) according to claim 1 or 2, wherein the inward projection (30) of the outer tube (27) has an annular shape extending circumferentially, a plurality of outward projections (38) are formed on an outer circumference of the large-diameter portion (34) of the tube filler (32) at circumferential intervals, and thereby the recess (39) engaging with the inward projection (30) of the outer tube (27) is defined between the largest-diameter portion (33) and the outward projection (38) of the tube filler (32).

## Patentansprüche

1. Kraftstoffbehälter für ein Motorrad (1), bei dem der Behälterhauptkörper (25) des Kraftstoffbehälters aus einem synthetischen Harz hergestellt ist, ein Außenrohr (27) geformt ist, um aus dem Behälterhauptkörper (25) herauszuragen, und ein Einfüllrohr (32) in das Außenrohr (27) eingeschoben ist, der obere Teil und untere Teil des Innenumfangs des Außenrohrs (27) in einen Teil mit großem Durchmesser (28) bzw. einen Teil mit kleinem Durchmesser (29) geformt sind, und
der obere Teil, ein Zwischenteil und untere Teil der Umfangswand des Einfüllrohrs (32) in einen Teil mit dem größten Durchmesser (33), einen Teil mit großem Durchmesser (34) bzw. einen Teil mit verringertem Durchmesser (35) geformt sind, ein Spalt zwischen dem Teil mit verringertem Durchmesser (35) des Einfüllrohrs (32) und dem Teil (29) mit geringem Durchmesser des Außenrohrs (27) definiert ist,
**dadurch gekennzeichnet, dass** am Innenumfang des Teils mit großem Durchmesser (28) des Außenrohrs (27) ein Vorsprung nach innen (30) gebildet ist, und am Außenumfang des Teils großen Durchmessers (34) des Einfüllrohrs (32) eine Aussparung (39) gebildet ist, um in den Vorsprung nach innen (30) unter Bildung eines schmalen Spalts unter dem Vorsprung nach innen (30) einzugreifen, und ein Gasverbindungsloch (40) an der unteren Stelle des Teils mit großem Durchmesser (34) und/oder an der oberen Stelle des Teils mit vermindertem Durchmesser (35) des Einfüllrohrs (32) gemacht ist.

2. Kraftstoffbehälter für ein Motorrad (1) gemäß Anspruch 1, bei dem das Einfüllrohr (32) aus einem synthetischen Harz geformt ist.

3. Kraftstoffbehälter für ein Motorrad (1) gemäß Anspruch 1 oder 2, bei dem der Vorsprung nach innen (30) des Außenrohrs (27) eine ringförmige Gestalt hat, die sich umfangmäßig erstreckt, eine Vielzahl von Vorsprüngen nach außen (38) auf dem Außenumfang des Teils mit großem Durchmesser (34) des Einfüllrohrs (32) umfangsmäßig verteilt angeordnet sind, wodurch die in den Vorsprung nach innen (30) des Außenrohrs (27) eingreifende Aussparung (39) zwischen dem Teil größten Durchmessers (33) und dem Vorsprung nach außen (38) des Einfüllrohrs (22) definiert ist.

## Revendications

1. Structure de réservoir à essence de motocycle (1), dans laquelle
un corps principal de réservoir (25) du réservoir à essence est constitué de résine synthétique, un tube externe (27) est moulé pour faire saillie depuis le corps principal de réservoir (25), et une garniture de remplissage de tube (32) est montée dans le tube externe (27), une partie supérieure et une partie inférieure d'une circonférence interne du tube externe (27) sont formées selon respectivement une partie de grand diamètre (28) et une partie de faible diamètre (29), et
une partie supérieure, une partie intermédiaire, et une partie inférieure d'une paroi circonférentielle de la garniture de remplissage de tube (32) sont respectivement formées selon une partie de plus grand diamètre (33), une partie de grand diamètre (34), et une partie de diamètre limité (35), un espace étant défini entre la partie de diamètre limité (35) de la garniture de remplissage de tube (32) et la partie de faible diamètre (29) du tube externe (27),
**caractérisée par le fait qu'**une saillie interne (30) est formée sur une circonférence interne de la partie de grand diamètre (28) du tube externe (27) et une cavité (39) est formée sur une circonférence externe de la partie de grand diamètre (34) de la garniture de remplissage de tube (32) de façon à être en contact avec la saillie interne (30) en laissant une petit espace sous la saillie interne (30), et un trou de communication de gaz (40) est ménagé dans la position basse de la partie de grand diamètre (34) et/ou dans la position haute de la partie de diamètre limité (35) de la garniture de remplissage de tube (32).

2. Structure de réservoir à essence de motocycle (1) selon la revendication 1, dans laquelle la garniture de remplissage de tube (32) est moulée à partir d'une résine synthétique.

3. Structure de réservoir à essence de motocycle (1) selon l'une des revendications 1 et 2, dans laquelle la saillie interne (30) du tube externe (27) a une forme annulaire s'étendant de façon circonférentielle, une pluralité de saillies externes (38) sont formées sur une circonférence externe de la partie de grand diamètre (34) de la garniture de remplissage de tube (32) selon des intervalles circonférentiels, et ainsi la cavité (39) au contact des saillies internes (30) du tube externe (27) est définie entre la partie de plus grand diamètre (33) et la saillie externe (38) de la garniture de remplissage de tube (32).
